# EUROPEAN PATENT APPLICATION

(11) **EP 2 120 369 A1**
(43) Date of publication of application: **18.11.2009**
(21) Application number: 07859786.1
(22) Date of filing: 12.12.2007
(51) Int. Cl.: H04B 7/26, H04Q 7/34

(54) **WIRELESS COMMUNICATION TERMINAL DEVICE, ACCESS POINT DEVICE, WIRELESS COMMUNICATION SYSTEM, AND INFORMATION SERVICE METHOD AND INFORMATION FETCHING METHOD IN THE SYSTEM**

(30) Priority: 10.01.2007 JP 2007002796
(71) Applicant: NEC Corporation, Tokyo 108-8001 (JP)
(72) Inventor: LEE, Jinsock, Tokyo 108-8001 (JP); HAMABE, Kojiro, Tokyo 108-8001 (JP)
(74) Representative: Betten & Resch
(86) International application number: PCT/JP2007/073963
(87) International publication number: WO 2008/084621

(57) **Abstract**

A wireless communication system includes a first network including a base station, a second network including a second base station, and a data providing server. The second base station extracts a first identification, data to identify the base station by receiving a radio wave transmitted from the base station. The data providing server collects the first identification data from the second base station and a second identification data to identify the second base station, and provides the second identification data for a wireless communication terminal connected to the first network.

## Description

### Technical Field

The present invention relates to a wireless communication terminal, an access point equipment, a wireless communication system, and a method for extracting and providing data.

### Background Art

Wireless LAN service has widely spread. Several providers started providing wireless LAN service in commercial use. Wireless LAN access point equipments have been installed in hotels, cafeterias, stations and other places to provide high-speed wireless communication service. IEEE802.11b has been widely applied as the wireless LAN standard and a service by standards such as IEE802.11g which supports communication at higher speed has started.

Meanwhile, a cellular network at present is been shifting from a PDC (Personal Digital Cellular) system and a GSM (Global System for Mobile Communication) system in a second generation to WCDMA (Wideband Code Division Multiple Access) system in a third generation. The above wireless LAN service and the third-generation cellular system, both of which provide high-speed communication, are different from each other in service. That is, the wireless LAN service provides high-speed data communication in a narrow service area (or coverage). The third-generation cellular system provides service in a wide coverage almost anywhere in the nation at a communication speed, which is not as fast as that of the wireless LAN service.

In this way, a user can receive high-speed wireless communication service at anytime and anywhere by selecting a suitable communication system from the data communication service and the wireless LAN service and the cellular system based on a user state such as a moving speed.

The user who receives the wireless LAN service sets to a wireless LAN unit (or a terminal) of the user, data required to receive the service such as SSID (Service Set Identifier) of an access point equipment notified by a wireless LAN service provider in advance, a user ID and a password. Various combinations are present for the data required to receive the service. For example, there is a case that a connection is permitted by acquiring SSID from a searched access point equipment, even if not knowing the SSID of the access point equipment. Then, the user investigates data of the access point equipment located nearest to a current position of the user and moves to a place close to the access point equipment to receive communication service. The position data of the access point equipment is distributed in the form of access point equipment map data from a wireless LAN service provider to the user. The position data of the access point equipment is also supplied on WEB. This method, however, requires the user to investigate the position data of the access point equipment on WEB. In this case, such investigation of the position data of the access point equipment is accompanied by following problems.

Firstly, preliminary investigation of the position data of the access point equipment imposes excessive time and effort on the user. If the user changes a movement destination on the way of the investigation, the preliminary investigation needs to be performed again, resulting in restriction of service usage. Secondly, when the user receives services from a plurality of wireless LAN service providers, the position data of the access point equipment for each of the wireless LAN service providers needs to be investigated to select an optimal access point equipment, which increases a burden to the user.

An access point equipment detecting apparatus for investigating the state of radio waves outputted from neighbor access point equipment is available commercially. Such an apparatus searches access point equipments which are present in the periphery of the current position of the user and supplies data required to receive a wireless LAN service such as the number of detected access point equipments, radio wave intensity and SSID. The user may simply select one of the detected access point equipments which is desired to be connected. By using such an apparatus, it is possible to acquire the position data more easily than a case of investigating an access point equipment position by using the above access point equipment map and/or the position data of the access point equipments on WEB. However, such an access point detection apparatus cannot acquire data without detecting radio waves from a wireless LAN access point equipment and it is uncertain where the user can receive the wireless LAN services.

Japanese Patent Application Publication (JP-P2003-259457A) discloses a technique related to a multi-service wireless communication system. This multi-service wireless communication system includes a plurality of wireless systems, a common signal wireless network base station, a management server, a network to connect these respective units, and a multi-service terminal to receive the service from these respective units. The common signal wireless network base station uses a common signal wireless zone to overlay a plurality of service zones in which services are provided from the plurality of the wireless systems. The management server holds a database which includes data of a usable wireless system in each position within the common signal wireless zone. The multi-service terminal has a position detecting section, a usable wireless system data obtaining section and a network selection switching section. The position detecting section in the multi-service terminal detects a position of its own station. The usable wireless system data obtaining section transmits data indicating the position detected by the position detecting section to the management server via the common signal wireless network base station, and obtains data regarding the usable wireless system in the detected position from the management server via the common signal wireless network base station. The network selection switching section selects a wireless system, most suitable for selection conditions, of usable wireless systems obtained by the usable wireless system data obtaining section.

The conventional system requires investigating the location of an access point equipment in advance, which imposes a burden on the user. Also, the access point detection apparatus is unable to obtain data without detecting radio waves from a wireless LAN access point equipment and it is uncertain where the user can receive wireless LAN service. Accordingly, the user will waste a power supply of a terminal in order to search for the access point equipment.

### Disclosure of Invention

An object of the present invention is to provide a wireless communication system which can acquire a data related to a service providing area in the vicinity of a current position of a user, and a base station, a wireless terminal and a data providing server in the wireless communication system. Also, another object of the present invention is to provide a wireless communication system which can update a data related to a service providing area in real time, and a base station, a wireless terminal and a data providing server of the wireless communication system.

The wireless communication system includes a first network having a base station, a second network having a second base station, and a data providing server. The second base station extracts a first identification data to identify a base station by receiving a radio wave transmitted from the base station. The data providing server collects the first identification data and second identification data to identify the second base station from the second base station, and provides the second identification data for a wireless terminal which is connected to the first network.

According to the present invention, it is made possible to provide the wireless communication system which can acquire the data related to the service providing area in the vicinity of the user, and a base station, a wireless terminal and a data providing server in the wireless communication system. The present invention also providers the wireless communication system which can update the data related to the service providing area in real time, and a base station device, a wireless terminal and a data providing server in the wireless communication system.

### Brief Description of Drawings

The aforementioned subject matters, effects and features of the present invention will become clearer from the descriptions of embodiments in conjunction with accompanying drawings.
FIG. 1 is a diagram showing a configuration of a system according to a first exemplary embodiment of the present invention;
FIG. 2 is a diagram showing a configuration of a base station in a cellular network;
FIG. 3 is a diagram showing a configuration of an access point equipment in a wireless LAN network;
FIG. 4 is a diagram showing a configuration of a position data server;
FIG. 5A is a diagram showing data collected by the access point equipment;
FIG. 5B is a diagram showing data collected by the access point equipment;
FIG. 6 is a diagram showing data held by the position data server;
FIG. 7 is a diagram showing an operation of the system according to the first exemplary embodiment of the present invention;
FIG. 8 is a diagram showing the configuration of the system according to a second exemplary embodiment of the present invention;
FIG. 9 is a diagram showing a configuration of the base station in the cellular network;
FIG. 10 is a diagram showing a configuration of the terminal;
FIG. 11 is a diagram showing a configuration of the position data server;
FIG. 12 is a diagram showing a configuration of an MBMS server;
FIG. 13 is a diagram showing an operation of the system; and
FIG. 14 is a diagram explaining a position relation among the base station, the access point equipment and the terminal according to a third exemplary embodiment.

### Best Mode For Carrying Out the Invention

Hereinafter, a system of the present invention will be described with reference to the attached drawings. The scope of the present invention, however, is not limited to the following exemplary embodiments.

### [First Exemplary Embodiment]

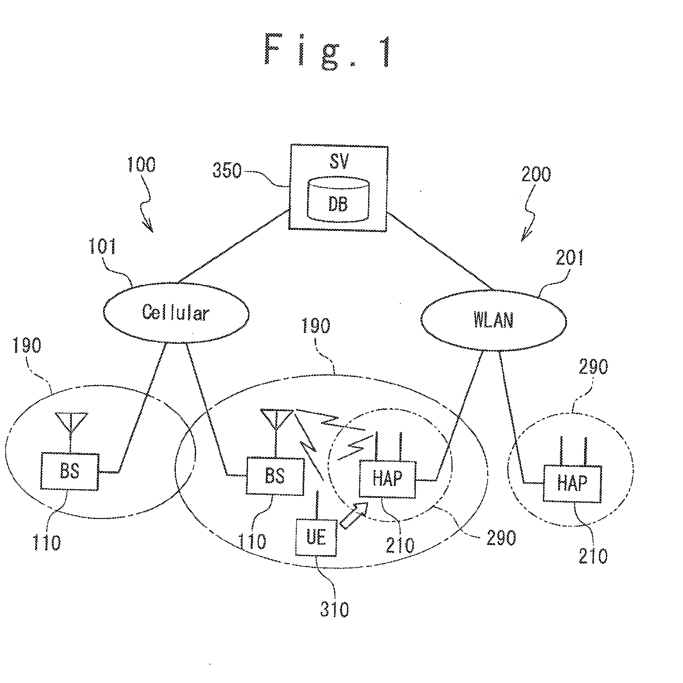

FIG. 1 shows an entire configuration of the system according to a first exemplary embodiment of the present invention. The system includes a cellular network 100, a wireless LAN network 200, a position data server 350 for managing service data therebetween, and a wireless terminal 310 connected with the cellular network 100 and the wireless LAN network 200.

The cellular network 100 includes a backbone network 101 and many base stations 110 each connected with the backbone network 101 in order to provide wireless communication services for the wireless terminals 310. The backbone network 101 may be realized by using a well-known configuration, and explanation thereof will be omitted. The wireless terminal 310 may also be a well-known mobile phone capable of performing data communication, and explanation thereof will be omitted.

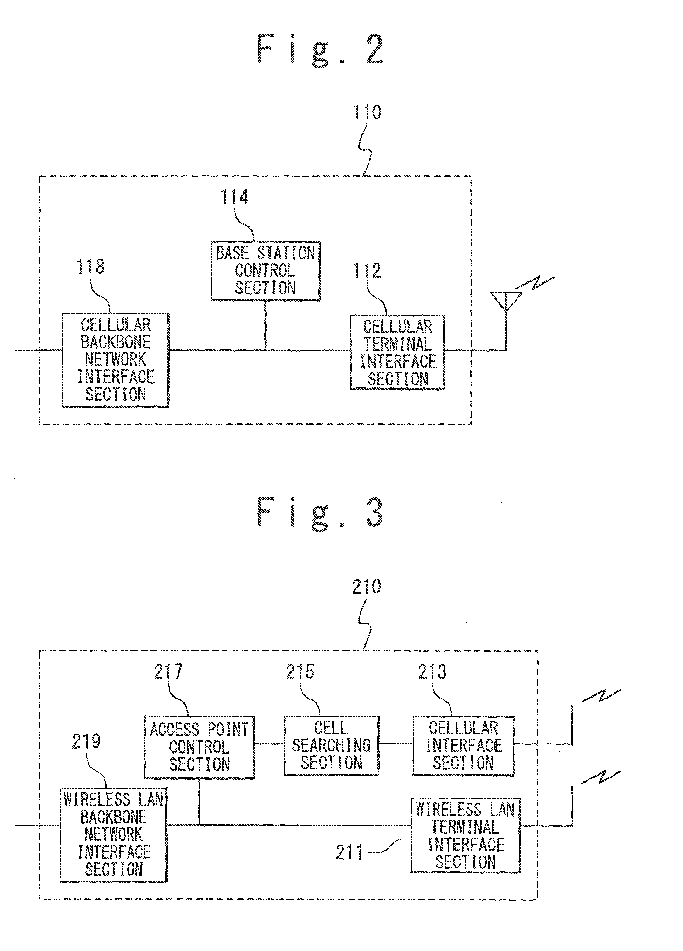

As shown in FIG. 2, the base station 110 includes a cellular terminal interface section 112, a base station control section 114 and a cellular backbone network interface section 118. The cellular terminal interface section 112 mainly plays a role of a layer 1 in wireless communication with the wireless terminal 310 which is present in a cell 190. Accordingly, the cellular terminal interface section 112 performs basic wireless communication and also executes a process to deal with any error occurring at that time. The base station control section 114 controls and manages the entire base station 110. For example, the base station control section 114 sets a connection line based on a telephone number sent from the wireless terminal 310 in voice communication, while transmitting/receiving packet data is received based on a specified IP address in IP connection. Here, the base station control section 114 transmits to the position data server 350, an access point search request which is issued from the wireless terminal 310 and received via the cellular terminal interface section 112. The cellular backbone network interface section 118 is used to allow connection with the backbone network 101 in the cellular network 100. The cellular backbone network interface 118 performs basic data transmission/reception and executes a process to deal with an error occurring in the data transmission/reception.

The wireless LAN network 200 includes a backbone network 201 and many access point equipments 210 each connected to the backbone network 201 in order to provide wireless LAN connection service for a mobile personal computer, PDA (personal Digital Assistant) and other devices. The backbone network 201 may be realized to have a well-known configuration, and explanation thereof will be omitted.

The access point equipment 210 is a hybrid access point equipment which can be connected to the cellular network as well and/or at least receive a network ID (i.e. PLMN-ID) notified by the base station 110 and a cell ID to identify the cell 190, and includes a wireless LAN terminal interface section 211, a cellular interface section 213, a cell searching section 215, an access point control section 217 and a wireless LAN backbone network interface section 219, as shown in FIG. 3.

The wireless LAN terminal interface section 211 plays a role of the layer 1 to allow wireless LAN connection with a wireless terminal. Accordingly, the wireless LAN terminal interface section 211 performs basic data transmission/reception and executes a process to deal with the error occurring in the data transmission/reception. The cellular interface section 213 is used to receive radio waves transmitted from the base station 110 in the cellular network 100. The cellular interface section 213 plays a role of the layer 1 in the cellular network 100 and may receive at least a part of downlink channels because it is only required to search neighbor base stations arranged in the cellular network 100.

The cell searching section 215 searches the base stations in the periphery of the access point equipment 210 based on data received by the cellular interface section 213. For example, a cell ID (i.e. identifier) and a PLMN-ID (Public Land Mobile Network-ID), which are included in a notification channel (i.e. BCCH) which is a channel used to notify control data from the base station to a mobile terminal, are extracted to specify the cell 190 (i.e. the base station 110) and a cellular network (i.e. provider) 100. It should be noted that the channel to transmit the cell ID and PLMN-ID is not necessarily limited to the notification channel and may be an individual channel and a common channel. Also, it should be noted that extraction of the cell ID and the PLMN-ID has been described here by assuming a cellular network, especially a 3G cellular network, but any data may be used as long as it can be used to identify a base station (i.e. cell) in the network.

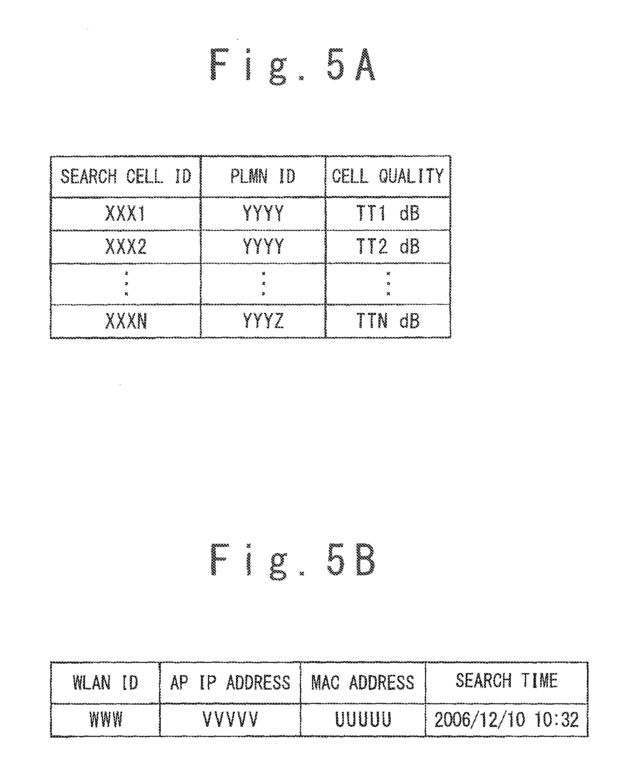

The access point control section 217 collects data of the cells 190 of the cellular network 100 specified by the cell searching section 215 and generates a neighbor cell search result report. For example, as shown in FIG. 5A, the neighbor cell search result report is generated from the cell ID and the PLMN-ID, and a cell quality indicated with a reception level of radio waves at the time of reception, for every cell 190 specified through the cell search, and transmitted to the position data server 350 via the wireless LAN backbone network interface section 219, together with data of the access point equipment 210 as shown in FIG. 5B. These functions of the access point equipment 210 may be realized by a CPU executing a program which is installed from a recording medium (not shown).

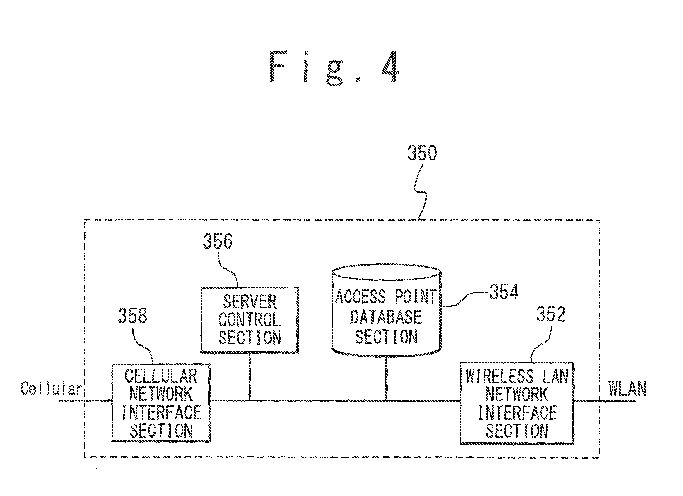

The position data server 350 is connected to the cellular network and the wireless LAN network, and includes a wireless LAN network interface section 352, an access point database section 354, a server control section 356 and a cellular network interface section 358, as shown in FIG. 4.

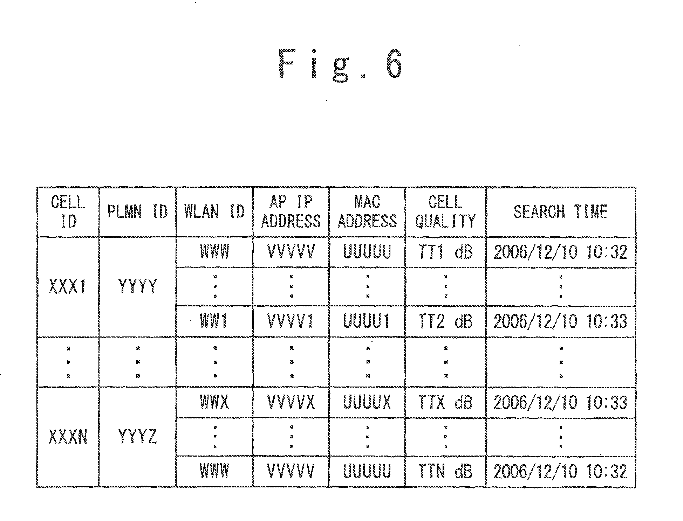

The wireless LAN network interface section 352 is connected to the wireless LAN backbone network 201 and acquires access point data from the neighbor cell search result report produced by the access point equipment 210. There may be a plurality of wireless LAN providers from which data are acquired. The access point database section 354 holds the access point data acquired from the wireless LAN provider in association with a cell in the cellular network 100 as shown in FIG. 6. Accordingly, by specifying the cell ID and the PLMN-ID, it is possible to acquire the data of access point equipments of the wireless LAN network which are present in the cell.

The server control section 356 extracts the data of access point equipments corresponding to the cell inquired via the cellular backbone network 100 from the access point database section 354, and provides the data for the wireless terminal 310 via the cellular backbone network 100. At this time, the sever control section 356 preferably confirms whether the wireless terminal 310 issuing the inquiry can receive the service to provide the access point data. The cellular network interface section 358 is connected to the cellular backbone network 100 and data is transmitted to and received from the wireless terminal 310 via the cellular network interface section 358.

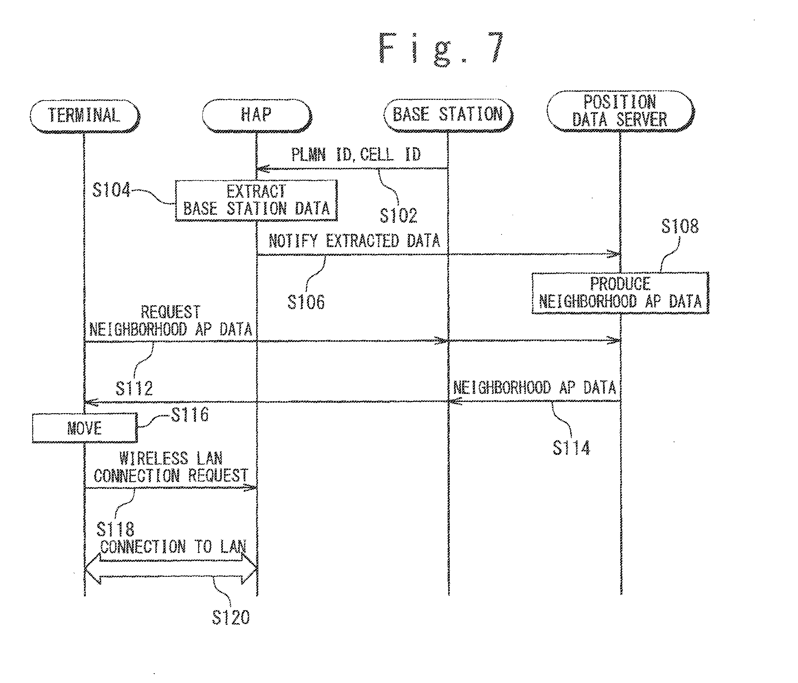

Next, an operation of the system according to the first exemplary embodiment will be described with reference to FIG. 7.

Each of the base stations 110 in the cellular network 100 notifies a network identifier to the cell 190 by using a notification channel, and the network identifier includes a network ID (i.e. PLMN-ID) and a cell ID to identify the cell 190 (step S102). Normally, the wireless terminal 310 communicates with the base station 110 based on the PLMN-ID and the cell ID. The access point equipment 210 in the wireless LAN network 200 receives a radio wave including the PLMN-ID and the cell ID by the cellular interface section 213.

The access point equipment 210 receives entire radio waves of the cell 190 receivable at that time and extracts the PLMN-IDs and the cell IDs included in the radio waves. Thus, as shown in FIG 5A, a cell quality indicating a reception state of each detected cell is obtained for each of the cells, in addition to the PLMN-ID and the cell ID (step S104).

After searching entire receivable radio waves in the cell, the access point equipment 210 notifies the search result to the position data server 350. The data to be notified includes the cell data obtained as a result of the search by the access point equipment 210 as shown in FIG. 5A, an ID of a wireless LAN network to which the access point equipment 210 belongs, an IP address and a MAC address as data of the access point equipment 210 itself as shown in FIG. 5B (step S106).

The position data server 350 receives a report from each of the access point equipments 210 in the wireless LAN network 200 and produces neighborhood access point data based on the received data. The neighborhood access point data can be obtained by rearranging data of the access point equipments 210 for every cell as shown in FIG. 6. That is, the access point database section 354 stores data such as ID of the wireless LAN network to which the access point equipment 210 belongs, an IP address and a MAC address of the access point equipment 210, a cell quality indicating a reception level at the time of reception, and search time in association with the cell ID and the PLMN-ID. Accordingly, by specifying a cell ID (or PLMN-ID), data of the access point equipment 210 which can receive the radio wave of the cell corresponding to the cell ID can be searched (step S108).

When the neighborhood access point data is produced in the access point database section 354 of the position data server 350, distribution service becomes available. A request for the neighborhood access point data is transmitted from the wireless terminal 310 in the cell 190 (step S112). At this time, it is desirable that the base station 110 receives the radio wave including the request, and adds the cell ID to the request for the neighborhood access point data, to transmit to the position data server 350. The wireless terminal 310 may transmit a receivable cell ID to the position data server 350. The position data server 350 extracts the access point data associated with the cell ID of the cell 190 from the access point database section 354. The position data server 350 transmits the neighborhood access point data to the wireless terminal 310 via the base station 110 (S114).

The wireless terminal 310 presents the neighborhood access point data to a user of the wireless terminal 310 by using a display unit. The user moves to a place where the presented access point equipment 210 is present (step S116), requests the access point equipment 210 to permit connection with the wireless LAN network (step S118) to start data communication by a wireless LAN connection (step S120). The wireless terminal 310 can perform wireless LAN connection, if having a function to realize connection with the wireless LAN network 200, whereas a personal computer or another unit is connected to the wireless LAN, if not having the function.

As stated above, the access point equipment 210 to the wireless LAN network 200 extracts cell data (i.e. cell ID and PLMN-ID) included in the received radio wave and notifies the extracted cell data to the position data server 350. The position data server 350 converts the data into the neighborhood access point data for each cell and provides the neighborhood access point data in response to the request from the wireless terminal 310. Thus, the wireless terminal 310 can acquire the data of the access point equipments in the neighborhood. The access point equipment 210 collects the cell data periodically such that the position data server 350 can provide the latest data of the access point equipments 210.

Although the IP address and MAC address of the access point equipment 210 are exemplified as the data of the access point equipment 210, other data such as SSID, latitude/longitude data and a landmark in the neighborhood may be supplied. The latitude/longitude data can be displayed on a map. The landmark data indicating the location of the access point equipment can be used to search the access point equipment without a map.

There may be a plurality of providers providing communication service by the cellular network and a plurality of providers providing communication service by the wireless LAN network. In this case, the database should be configured to include data for identifying the provider in neighborhood access point data so that an end user can select the provider providing service.

### [Second Exemplary Embodiment]

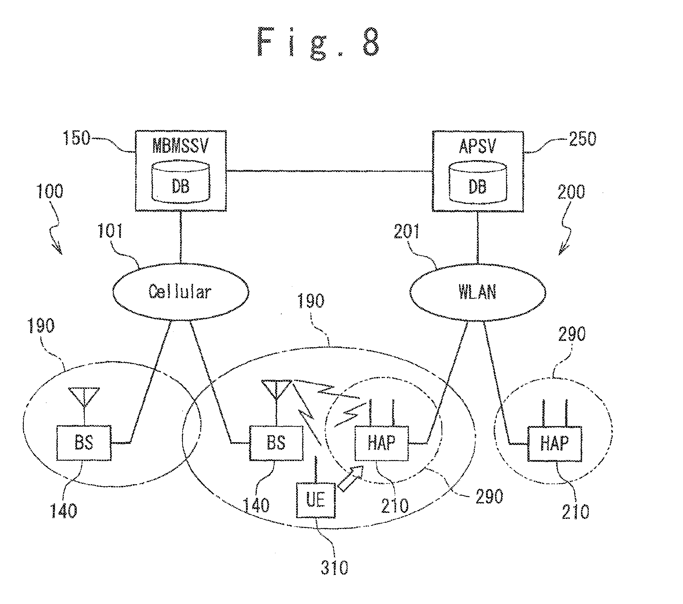

FIG. 8 shows an entire configuration of a system according to a second exemplary embodiment of the present invention. The cellular network 100 includes an MBMS (Multimedia Broadcast and Multicast Service) server 150 to provide MBMS within the network, and a base station 140 corresponding to the MBMS. The wireless LAN network 200 includes a position data server 250 to collect data of the access point equipments 210. The remaining configuration is the same as that of the first exemplary embodiment, but will be described again.

The cellular network 100 includes the backbone network 101, many base stations 140 connected to the backbone network 101, and the MBMS server 150 which provides the MBMS, to provide wireless communication service for the wireless terminal 310. The backbone network 101 may be realized by a well-known configuration and explanation thereof will be omitted.

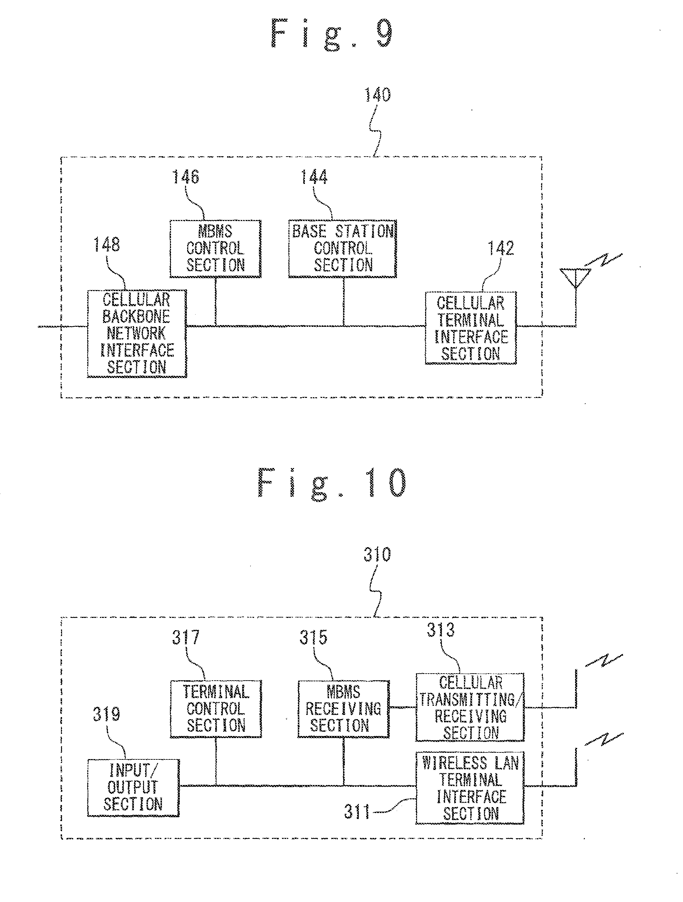

As shown in FIG. 9, the base station 140 includes a cellular terminal interface section 142, a base station control section 144, an MBMS control section 146 and a cellular backbone network interface section 148. The cellular terminal interface section 142 plays a role of the layer 1 mainly in wireless communication with the wireless terminal 310 which is present in the cell 190. Accordingly, the cellular terminal interface section 142 performs basic wireless communication and executes a process of dealing with errors occurring at that time. The base station control section 144 controls and manages the entire base station 140, and controls unicast communication service. For example, the base station control section 144 sets a connection line based on a telephone number transmitted by the wireless terminal 310 in case of voice communication, and transmits/receives packet data based on the IP address in case of IP data communication.

The MBMS control section 146 controls and manages MBMS communication service. For example, the MBMS control section 146 controls power by allocating an MBMS channel. The MBMS control section 146 holds the neighborhood access point data supplied from the MBMS server 150 to the terminal to supply the neighborhood access point data periodically by using a common channel. The cellular backbone network interface section 148 is used to permit connection with the backbone network 101 in the cellular network 100. The cellular backbone network interface section 148 performs basic data transmission/reception and executes a process of dealing with errors occurring in the data transmission/reception. The MBMS control section 146 transmits/receives data to/from the MBMS server 150 via the backbone network interface section 148.

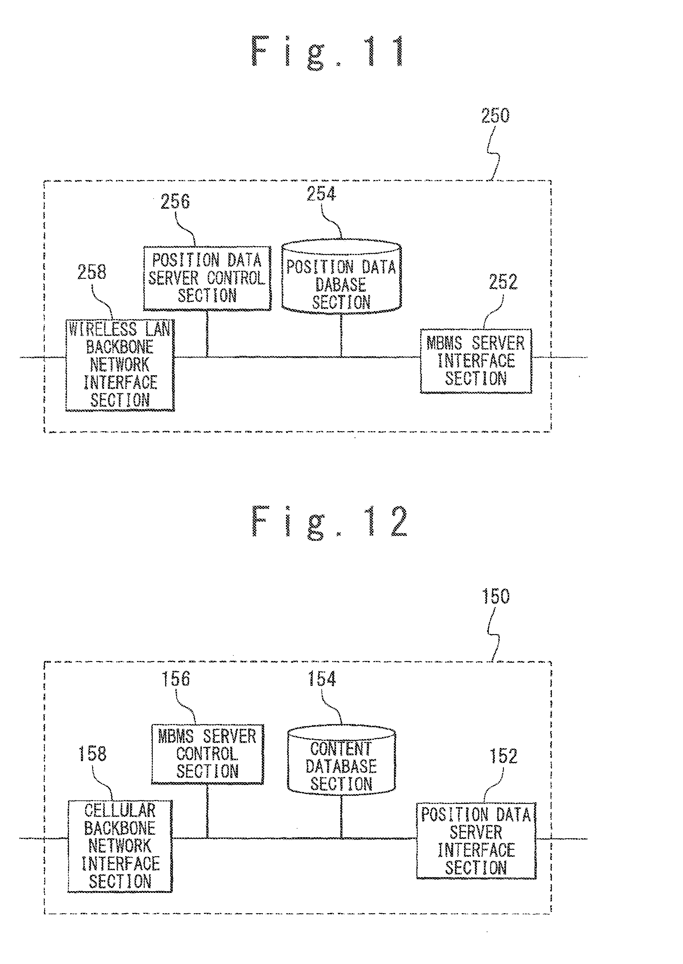

As shown in FIG. 12, the MBMS server 150 includes a position data server interface section 152, a content database section 154, an MBMS server control section 156 and a cellular backbone network interface section 158.

The position data server interface section 152 is connected to the position data server 250 in the wireless LAN network 200, and acquires the access point data such as a neighbor cell search result report collected by the position data server 250. There may be a plurality of wireless LAN providers from which the data is acquired.

The content database section 154 holds data for MBMS as content. The peripheral access point data is used for one of the services in the MBMS. Here, the access point data acquired from the wireless LAN provider is held in relation to a cell in the cellular network 100, as shown in FIG. 6. Accordingly, by specifying a cell ID and a PLMN-ID, data of the access point equipment 210 of the wireless LAN network 200 which is present in the cell can be obtained.

The MBMS server control section 156 manages entire data regarding MBMS service. Here, the MBMS server control section 156 manages communication with a wireless terminal which subscribes neighborhood access point data providing service. The MBMS server control section 156 also extracts from the content database 154, data of the access point equipment 210 which is present in a cell and managed by each of the base stations 140, and distributes it to each of them. The cellular backbone network interface section 158 is connected to the cellular backbone network and communicates with other nodes in the cellular network.

The wireless LAN network 200 has the backbone network 201, the number of the access point equipments 210 connected to the backbone network 201, and the position data server 250 for holding data of each of the access point equipments 210 to provide wireless LAN connection service for a mobile personal computer and a PDA or other devices. The backbone network 201 may be realized by a well-known configuration and explanation thereof will be omitted.

The access point equipment 210 is a hybrid access point equipment which can be connected to the cellular network 100 and/or can receive a network ID (i.e. PLMN-ID) notified by the base station 110 and a cell ID to identify the cell 190 at least, and includes the wireless LAN terminal interlace section 211, the cellular interface section 213, the cell searching section 215, the access point control section 217 and the wireless LAN backbone network interface section 219, as shown in FIG. 3.

The wireless LAN terminal interface section 211 plays a role of a layer 1 to permit wireless LAN connection with a wireless terminal. Accordingly, the wireless LAN terminal interface section 211 performs basic data transmission/reception and a process of dealing with errors occurring in the data transmission/reception. The radio wave transmitted from the wireless LAN terminal interface section 211 is used to provide service for a terminal in a spot 290.

The cellular interface section 213 is used to receive the radio wave transmitted from the base station in the cellular network. The cellular interface section 213 plays a role of the layer 1 in the cellular network and may receive at least a part of downlink channels because it is sufficient to search base stations neighborly arranged in the cellular network.

The cell searching section 215 searches the base stations in the neighborhood of the access point equipment 210 based on data received by the cellular interface section 213. For example, a cell ID (i.e. identifier) and a PLMN-ID (Public Land Mobile Network-ID), which are included in a notification channel (i.e. BCCH) as a channel to notify control data from the base station to the mobile terminal, are extracted to specify the cell 190 (i.e. base station 110) and a cellular network (i.e. provider). It should be noted that a channel to transmit the cell ID and the PLMN-ID is not necessarily limited to the notification channel and may be an individual channel or a common channel. Also, it should be noted that although it is described that the cell ID and the PLMN-ID are extracted by assuming a cellular network, especially 3G cellular network, any data may be used as long as it can be used to identify the base station in the network.

The access point control section 217 collects data of the cell 190 specified by the cell searching section 215 in the cellular network 100 and produces a neighbor cell search result report. For example, as shown in FIG. 5A, the neighbor cell search result report is produced to include the cell ID and the PLMN-ID, and a cell quality shown by a reception level at the time of reception for every cell 190 which has been specified through the cell search, and transmitted the report together with data regarding the access point equipment 210 to the position data server 250 via the wireless LAN backbone network interface section 219, as shown in FIG. 5B. These functions of the access point equipment 210 may be realized by a program in a recording medium(not shown).

The position data server 250 as shown in FIG. 11 includes an MBMS server interface section 252, a position data database section 254, a position data server control section 256 and a wireless LAN backbone network interface section 258.

The MBMS server interface section 252 is connected to the MBMS server 150, and transmits access point data such as the neighbor cell search result report collected in the wireless LAN network to the MBMS server 150. It is preferable to be directly connected to the MBMS server by using an exclusive line or the like, but a method to transmit/receive data is not limited thereto.

The position data database section 254 holds neighbor cell search result collected from each of the access point equipments 210. The data collected from each of the access point equipments 210 is stored in association with the cell ID and the PLMN-ID of the cell .190 in the cellular network 100 as shown in FIG. 6. Accordingly, even if there is a plurality of the cellular networks 100 corresponding to a plurality of providers, neighborhood access point data can be sent for each of the providers.

The position data server control section 256 collects neighbor cell search result from the entire access point equipments 210 in the wireless LAN network 200. Since the cell ID and the PLMN-ID of a neighbor base station present in the cellular network 100 are extracted from the radio wave received by the access point equipment 210, the collected data is stored for every cell corresponding to each of the access point equipments 210 as shown in FIG. 5. The position data server control section 256 converts the data into another data in accordance with the cell ID and the PLMN-ID as shown in FIG. 6, to store in the position data database 254.

The wireless LAN backbone network interface section 258 is connected to the backbone network 201 and communicates with the access point equipment 210 in the network.

The wireless terminal 310 shown in FIG. 10 includes a wireless LAN interface section 311, a cellular transmitting/receiving section 313, an MBMS receiving section 315, a terminal control section 317 and an input/output section 319, and can receive service provided from the cellular network and the wireless LAN network.

The wireless LAN interface section 311 plays a role of the layer 1 in the wireless LAN, and performs basic data transmission/reception and executes an error process. That is, the wireless LAN interface section 311 communicates with the access point equipment 210. The cellular transmitting/receiving section 313 plays a role of the layer 1 in cellular communication, and performs the basic wireless transmission/reception and executes the error process. The cellular transmitting/receiving section 313 also receives the radio wave (or channel) for MBMS to be supplied from the cellular network 100.

The MBMS receiving section 315 performs a process specific to MBMS such as requesting MBMS service to receive entire MBMS service subscribed by a user. The terminal control section 317 manages and controls the entire terminal. The terminal control section 317 also causes a display function or other functions in the input/output section 319 to show neighborhood access point data provided by the MBMS for a user who uses the terminal 310. The input/output section 319 inputs/outputs data such as a key input and display of the neighborhood access point data. These functions in the terminal 310 may be realized by a program.

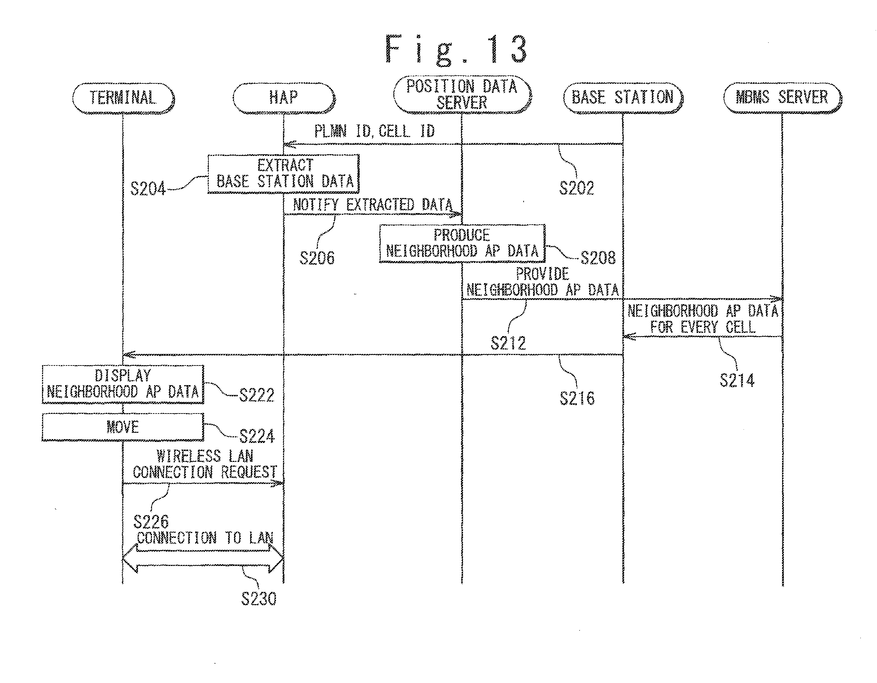

Next, an operation of the system according to the second exemplary embodiment will be described referring to FIG. 13.

Each of the base stations 140 in the cellular network 100 notifies to the cell 190, a network identifier, which includes a network ID (i.e. PLMN-ID) and a cell ID to identify the cell 190, by using a notification channel or other channels (step S202). The wireless terminal 310 normally communicates with the base station 140 based on the PLMN-ID and the cell ID. The access point equipment 210 in the wireless LAN network 200 receives the radio wave including the notified PLMN-ID and cell ID by the cellular interface section 213.

The access point equipment 210 receives the entire radio waves of the cells 190 receivable at that time and extracts the PLMN-ID and the cell ID included in the radio waves for each of the cells, as well as the cell quality indicating a reception state of each cell, as shown in FIG. 5A (step S204).

After searching the entire receivable radio waves of cells, the access point equipment 210 reports the search result to the position data server 250. The data of the report includes cell data obtained as a result of the search by the access point equipment 210 as shown in FIG. 5A, in addition to ID of the wireless LAN network to which the access point equipment 210 belongs, an IP address and a MAC address or other addresses as data of the access point equipment 210 itself as shown in FIG. 5B (step S206).

The position data server 250 receives the report from each of the access point equipments 210 in the wireless LAN network 200 and produces the neighborhood access point data based on the received data. The neighborhood access point data can be obtained by rearranging data of the access point equipments 210 for each cell as shown in FIG. 6. That is, the position data database section 254 stores in association with the cell ID and the PLMN-ID, data such as ID of the wireless LAN network to which the access point equipment 210 belongs, the IP address and the MAC address of the access point equipment 210, cell quality shown by a reception level at the time of reception, and search time. Accordingly, it is made possible to search the data of the access point equipment 210 which can receive the radio wave of the cell for each of cellular network providers (step S208).

The neighborhood access point data is provided for the MBMS servers 150 of cellular network providers, respectively (step S212). Here, the neighborhood access point data is directly supplied from the position data server 250 to the MBMS server 150, but any other methods may be applied.

The MBMS server 150 distributes the neighborhood access point data to the base station 140 in each of the cells 190 periodically or every time the neighborhood access point data is supplied (step S214). The base station 140 holds the distributed neighbourhood access point data.

The base station 140 uses a common channel to load the neighborhood access point data which is notified within the cell 190. Here, the common channel is used to notify data but an individual channel may be used. This notification is preferably made periodically. The wireless terminal 310 receives the notified neighborhood access point data (step S216).

The wireless terminal 310 receives the neighborhood access point data and presents the data to the user by using a display unit or another unit (step S222). The user moves to a place in the vicinity of a communicable access point based on the presented neighborhood access point data. At this time, the user can investigate the details of communicable access point equipment via the cellular network 100. If it is possible to obtain the detailed position of the access point equipment at this time, it is unnecessary to supply power to the wireless terminal 310 before reaching the position and power can be saved (step S224) . The wireless terminal 310 outputs a wireless LAN connection request to the access point equipment 210 (step S226), and communication by the LAN connection is started upon authorization (step S230).

Although the MBMS server 150 has been described as being separated from the base station 140, functions of the MBMS server may be installed in the base station 140.

### [Third Exemplary Embodiment]

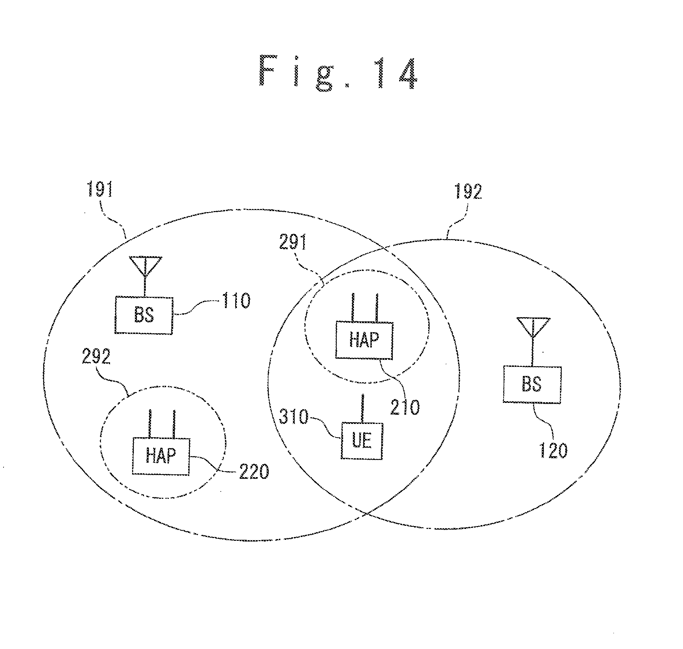

Next, a third exemplary embodiment of the present invention will be described referring to FIG. 14. Base stations 110 and 120 in a cellular network output radio waves to cover cells 191 and 192, respectively. Access points 210 and 220 in a wireless LAN network also output radio waves to cover spots 291 and 292, respectively. The ranges of the cells 191 and 192 are larger than those of the spots 291 and 292. Accordingly, the access point equipments 210 and 220 in the wireless LAN network are included in the cell 191 in the cellular network. The access point equipment 210 is also included in the cell 192.

The wireless terminal 310 is included in the cells 191 and 192 and can receive the radio waves from both of the base stations. This means that the wireless terminal 310 is supplied with data of the access point equipments which are present in a considerably large area. More specifically, even if neighborhood access point data is provided, the access point equipment nearest to the wireless terminal 310 is unknown. A distance from one end to the other end of a cell in the cellular network is several kilometers or longer depending on a situation, and it is not easy for a user to find the access point equipment when being unacquainted with the place.

Even in such a case, more appropriate data is supplied based on the provided neighborhood access point data in the wireless terminal 310 according to the third exemplary embodiment. The wireless terminal 310 has a same configuration as the wireless terminal 310 described in the second exemplary embodiment, and detailed explanation thereof will be omitted, but there is a difference in how to deal with the neighborhood access point data.

More precisely, the wireless terminal 310 acquires neighborhood access point data notified by the base stations 110 and 120. At this time, data of the access point equipment 210 can be obtained from both of the base stations 110 and 120. The data on the access point equipment 220 is obtained only from the base station 110 and the neighborhood access point data notified by the base station 120 does not include the data of the access point equipment 220. Since the wireless terminal 310 obtains data from the base stations 110 and 120, it is estimated that the access point equipment 210 is under the same reception environment as the wireless terminal 310. Accordingly, the wireless terminal 310 presents the data of the access point equipment 210 to the user.

More data acquired from the base stations makes it possible for the wireless terminal 310 to estimate an access point equipment under a more similar reception environment. Furthermore, an access point equipment closer to the wireless terminal 310 can be searched by referring to the cell quality included in the neighborhood access point data and specifying an access point equipment which receives the radio wave transmitted by a base station in the same manner as the terminal 310.

In addition, if the position data of an access point equipment such as longitude/latitude and address is contained in the access point data, a position of the access point equipment can be shown on a map the wireless terminal 310. By mounting a GPS (Global Positioning System) function on the wireless terminal 310, the position of the wireless terminal 310 can be displayed to certainly navigate the user to a place with an access point equipment.

In a wireless terminal which can be connected to the cellular network 100 and the wireless LAN network 200, a man-machine interface can be provided without imposing a burden on the user by operating each of functions in cooperation. Even if respective functions are mounted on another terminal, a man-machine interface can be provided with a less burden imposed on the user. Each of functions can also be connected temporarily.

As stated above, the present invention does not require preliminary investigation of the access point data. That is, the user can automatically obtain the data of the access point equipments 210 which is present in the vicinity, from the cellular network 100 wherever the user goes, and the preliminary investigation is unnecessary. Accordingly, even if the user changes a moving destination, the access point data can be obtained in the moving destination. Furthermore, even if the user has subscribed services provided from a plurality of wireless LAN providers, it is unnecessary to investigate the position data of access point equipments for each of the providers, and a burden imposed on the user is reduced. At this time, a searcher apparatus for detecting another access point equipment is not required and an economical burden imposed on the user can also be reduced. The user can further know a state of the access point equipment in real time.

Various modifications of the above exemplary embodiments can be easily realized by those who are skilled in the art. Accordingly, the present invention is not limited to the above exemplary embodiments and shall be interpreted in a largest scope considered by claims and equivalents thereof.

## Claims

1. A wireless communication system comprising:
a wireless communication terminal;
a first network including a base station;
a second network including an access point equipment configured to extract a first identification data of said base station, from a radio wave transmitted from said base station; and
a data providing server configured to collect the first identification data and a second identification data of said access point equipment from said access point equipment, and provide the second identification data for said wireless communication terminal connected to said first network.

2. The wireless communication system according to claim 1, wherein said access point equipment comprises:
base station receiving means for receiving a signal transmitted from said base station through said first network;
terminal transmitting/receiving means for performing transmission to and reception from said wireless communication terminal through said second network;
searching means for acquiring the first identification data contained in the signal received by said base station receiving means; and
server interface means for notifying the first identification data acquired by said searching means to said data providing server..

3. The wireless communication system according to claim 1 or 2, wherein said data providing server comprises:
second receiving means for receiving a signal from said access point equipment; and
identification data managing means for extracting and managing the first identification data for identifying said base station from which said access point equipment receives the signal and the second identification data for identifying said access point equipment, from the signal received by said second receiving means.

4. The wireless communication system according to any of claims 1 to 3, wherein said wireless communication terminal comprises:
first transmitting/receiving means connected with said base station; and
second transmitting/receiving means connected with said access point equipment, and
wherein said wireless communication terminal receives an identification data of said access point equipment through said base station by said first transmitting/receiving means and displays a data related to the identification data of said base station.

5. The wireless communication system according to any of claims 1 to 4, wherein said first network is a wireless communication network for a wider area, and
said second network is a wireless communication network for a narrower area.

6. The wireless communication system according to any of claims 1 to 5, wherein said first network is a cellular network, and said second network is a wireless LAN network.

7. The wireless communication system according to any of claims 1 to 6, wherein the first identification data comprises a cell ID for identifying a cell which is a service provision area of said base station, and a PLMN-ID for identifying said first network.

8. The wireless communication system according to any of claims 1 to 7, wherein said access point equipment notifies a cell quality indicating a reception state of the signal from said base station from said server interface means to said data providing server.

9. The wireless communication system according to any of claims 1 to 8, wherein said data providing server notifies the second identification data related to the first identification data to said wireless communication terminal in response to a request from said wireless communication terminal.

10. The wireless communication system according to any of claims 1 to 9, wherein said first transmitting/receiving means of said wireless communication terminal receives the signals from a plurality of said base stations, extracts the second identification data respectively related to said plurality of base stations from the signals, and provides common ones of the extracted second identification data to a user.

11. The wireless communication system according to any of claims 1 to 10, wherein said wireless communication terminal further comprises a display configured to display the second identification data together with a map.

12. The wireless communication system according to claim 11, wherein said wireless communication terminal has a GPS (Global Positioning System) function and displays a position of said wireless communication terminal on the map.

13. A data providing method in a wireless communication system which comprises a first network with a base station and a second network with an access point equipment, comprising:
a reception data extracting step of extracting a first identification data for identifying said base station, from a signal transmitted from said base station by said access point equipment;
a reception data collecting step of collecting a second identification data for identifying said access point equipment, as well as the first identification data;
a reception data storing step of storing the first identification data and the second identification data which are related to each other; and
a data providing step of providing the second identification data for said wireless communication terminal which communicates through said first network.

14. The data providing method according to claim 13, wherein said reception data extracting step comprises:
a base station receiving step of receiving the signal transmitted from said base station through said first network;
a terminal communicating step of communicating with said wireless communication terminal through said second network;
a searching step of acquiring the first identification data to identify said base station contained in the signal received in said base station receiving step; and
a notifying step of notifying the first identification data acquired in said searching step to said data providing server.

15. The data providing method according to claim 14, wherein said notifying step comprises:
notifying a cell quality indicating a reception state of the signal received from said base station to the data providing server in addition to the first identification data.

16. The data providing method according to any of claims 13 to 15, wherein said reception data collecting step comprises:
a second receiving step of receiving a signal from said access point equipment; and
an identification data managing step of extracting and managing the first identification data to identify said base station from which said access point equipment receives the signal and the second identification data to identify said access point equipment from the signal received in said second receiving step.

17. The data providing method according to claim 16, wherein said reception data collecting step comprises:
a step of notifying the second identification data related to the first identification data to said wireless communication terminal in response to a request from said wireless communication terminal.

18. The data providing method according to any of claims 13 to 17, wherein said data providing step comprises:
supplying the identification data of said access point equipment to a first communicating section of said wireless communication terminal which is connected with said base station; and
supplying the identification data of said access point equipment to a second communicating section of said wireless communication terminal which is connected with said access point equipment,
said wireless communication terminal comprises:
an identification data receiving step of receiving the identification data of said access point equipment by said first communicating section; and
a presenting step of presenting the data related to the identification data of said access point equipment by said second communicating section.

19. The data providing method according to claim 18, wherein said identification data receiving step comprises:
receiving signals from said plurality of base station and extracting the second identification data related to each of said plurality of base stations, and
said presenting step comprises:
presenting to a user, the second identification data common to the second identification data extracted from the signals of said plurality of base stations.

20. The data providing method according to claim 18 or 19, wherein said presenting step further comprises:
displaying the second identification data together with a map on a display.

21. The data providing method according to claim 20, wherein said presenting step further comprises:
detecting a current position of said wireless communication terminal by using a GPS (Global Positioning System) function; and
displaying the current position of said wireless communication terminal on said map.

22. The data providing method according to any of claims 13 to 21, wherein said first network is a wireless communication network for s wider area, and said second network is a wireless communication network for a narrower area.

23. The data providing method according to any of claims 13 to 22, wherein said first network is a cellular network and said second network is a wireless LAN network.

24. The data providing method according to any of claims 13 to 22, wherein the first identification data comprises a cell ID to identify a cell as a service provision area of said base station, and a PLMN-ID to identify said first network.

25. A program for making an access point function as a base station receiving means for receiving a signal transmitted from a base station, a terminal communicating means for communicating with a wireless communication terminal, searching means for acquiring an identification data which is used to identify said base station which is contained in a signal received through a base station receiving process, and notifying means for notifying the identification data acquired by a search process to said data providing server.

26. A program for making a wireless communication terminal function as first communication means for communicating with a base station, second communicating means for communicating an access point equipment, and presenting means for presenting a data related to an identification data of said access point equipment received through the first communicating process.
